# EUROPÄISCHE PATENTSCHRIFT

(11) **EP 0 522 265 B1**
(45) Veröffentlichungstag und Bekanntmachung des Hinweises auf die Patenterteilung: **27.12.1996**
(21) Anmeldenummer: 92108195.6
(22) Anmeldetag: 15.05.1992
(51) Int. Cl.: B01D 17/025

(54) **Flüssigkeitsabscheider**
Liquid separator
Séparateur de liquide

(30) Priorität: 11.07.1991 DE 4122902
(43) Veröffentlichungstag der Anmeldung: 13.01.1993
(73) Patentinhaber: Benkeser, Michael, Dipl.-Ing. (FH), D-77886 Lauf (DE)
(72) Erfinder: Benkeser, Michael, Dipl.-Ing. (FH), D-77886 Lauf (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 387 780
- DE-U- 8 715 165
- DE-U- 8 804 819
- DE-U- 9 112 933

## Beschreibung

Die Erfindung betrifft einen Flüssigkeitsabscheider, insbesondere zum Trennen von Gemischen aus Wasser und spezifischen leichteren Flüssigkeiten, wie Öl od. dgl., bestehend aus einem Behälter mit einem oben liegenden Einlauf mit Einlaufschikane und einem auf etwa gleicher Höhe sowie gegenüber dem Einlauf liegenden Ablauf und einem an den Einlauf anschließenden Abscheiderteil mit einer bodennahen Trenneinrichtung und einem von dieser nach oben zum Ablauf reichenden Ablaufschacht, wobei die Trenneinrichtung einen von dem Flüssigkeitsgemisch durchströmten Filter mit Filtermaterial aufweist.

Flüssigkeitsabscheider zum Trennen von beispielsweise Wasser-Öl-Gemischen oder entsprechenden Emulsionen werden vielfältig benötigt, um den heutigen Abwasservorschriften Genüge zu leisten. Mit Wasser vermischte, insbesondere emulgierte Ölanteile fallen heute bei vielen Arbeitsprozessen z.B. als Kühlmittel in der Zerspannungstechnik oder bei Reinigungs- und Wartungsarbeiten an. Auch gelangen Öle infolge von Unachtsamkeit, Verschütten, Überlaufen, durch unsachgemäßen Umgang oder technisch bedingte unvermeidbare Verluste in die Umwelt und belasten diese wesentlich. Zum Schutze der Umwelt sind deshalb für gewerbliche Betriebe Reinigungsgeräte, üblicherweise sogenannte Abscheider, vorgeschrieben, die insbesondere der Trennung von Gemischen bzw. Emulsionen aus Wasser und spezifisch leichteren Flüssigkeiten dienen. Als Abscheider finden überwiegend einerseits sogenannte Leichflüssigkeitsabscheider und andererseits sogenannte Koaleszenzabscheider Verwendung, wie sie in der EP-A-0 378 780 gezeigt sind. Bei Leichtflüssigkeitsabscheidern handelt es sich regelmäßig um bloße Schwerkraftabscheider, während bei Koaleszenzabscheidern neben dem Schwerkraftprinzip Koaleszenzfilter eingesetzt werden, um auch dispergierte Öltröpfchen durch oberflächenaktives Material zurückzuhalten und zu größeren Öltröpfchen umzubilden, die dann wiederum nach dem Schwerkraftprinzip aufsteigen.

Der Koaleszenzabscheider gemäß der EP-A-0 378 780, von dem im Oberbegriff des Anspruchs 1 ausgegangen wird, weist einen Behälter auf, der auf einer Seite nahe dem oberen Rand einen Einlauf besitzt, an den sich eine Einlaufschikane anschließt. Auf der dem Einlauf gegenüberliegenden Seite ist in dem Behälter in etwa gleicher Höhe ein Ablauf vorgesehen. Ein durch den Einlauf in den Behälter eintretendes, zu reinigendes Flüssigkeitsgemisch durchläuft einen im Behälter angeordneten Abscheiderteil, bevor es den Behälter über den Ablauf wieder verläßt. Der Abscheiderteil umfaßt eine Trennvorrichtung mit einem von dem Flüssigkeitsgemisch durchströmten Filter mit Filtermaterial, in dem auch dispergierte Öltröpfchen zurückgehalten und zu größeren Tröpfchen umgebildet werden, während die gereinigte Flüssigkeit über einen Ablaufschacht zum Ablauf gelangt. Die im Filtermaterial zurückgehaltenen Stoffe und Teilchen sollen nach dem Schwerkraftprinzip an die Oberfläche der im Behälter befindlichen Flüssigkeit aufsteigen und sich dort ansammeln. Es hat sich jedoch gezeigt, daß sich das Filtermaterial bei bestimmten Anwendungen bereits nach relativ kurzer Gebrauchsdauer zusetzt, wodurch die Reinigungsleistung des Flüssigkeitsabscheiders herabgesetzt ist.

Aus der DE-U-88 04 819 ist ebenfalls ein Flüssigkeitsabscheider mit den Merkmalen des Oberbegriffs des neuen Patentanspruchs 1 bekannt. Auch mit einem derartigen Flüssigkeitsabscheider sind die vorgenannten Probleme verbunden, wobei bei der Ausgestaltung gemäß der DE-U-88 04 819 nachteilig ist, daß die Strömung des zu reinigenden Flüssigkeitsgemisches, die vertikal nach unten verläuft, und die Strömung der aufsteigenden Stoffe und Teilchen, die vertikal nach oben gerichtet ist, genau entgegengesetzt verlaufen und sich dadurch nachteilig beeinflussen.

Der Erfindung liegt die Aufgabe zugrunde, einen Flüssigkeitsabscheider der genannten Art zu schaffen, bei dem in konstruktiv einfacher Weise ein hoher Abscheidegrad erzielt wird.

Diese Aufgabe wird bei einem Flüssigkeitsabscheider dadurch gelöst, daß das Filtermaterial des Filters von einem an gegenüberliegenden Seiten und zu einem Schacht hin offenen Mantel umgeben und im wesentlichen horizontal durchströmt ist und daß oberhalb des Mantels der mit dem Filter strömungstechnisch in Verbindung stehende Schacht angeordnet ist, in dem die im Filtermaterial zurückgehaltenen Stoffe und Teilchen aufsteigen können.

Erfindungsgemäß besteht die Trenneinrichtung aus einem im wesentlichen horizontal durchströmten Filter, z.B. einer Filterpatrone, und einem an diese nach oben anschließenden Schacht, der über einen Strömungsdurchlaß mit dem Innenraum des Filters bzw. der Filterpatrone in Verbindung steht. Das zu reinigende Flüssigkeitsgemisch bzw. die entsprechende Emulsion durchströmt den Filter, wobei das in dem Filter enthaltene Filtermaterial das Gemisch bzw. die Emulsion trennt. Die in dem Filtermaterial adhäsiv und kohäsiv zurückgehaltenen Stoffe, beispielsweise das Öl sowie mit diesen verbundene chemische Stoffe, steigen aufgrund ihres geringeren spezifischen Gewichtes als Wasser innerhalb des Filters auf und gelangen durch den Strömungsdurchlaß zwischen dem Innenraum des Filters und dem Schacht in diesen hinein, indem sie in praktisch laminarer Strömung an die Oberfläche der in dem Flüssigkeitsabscheider befindlichen Flüssigkeit aufsteigen. Somit ist ein stetiges Abführen der ausgefilterten Stoffe aus dem Filtermaterial des Filters erreicht. Auf diese Weise kann für das Filtermaterial über eine relativ lange Betriebsdauer eine hohe Reinigungsleistung erreicht werden.

Aufgrund des an gegenüberliegenden Seiten offenen Mantels ist in einfacher Weise eine präzise Festlegung der Strömungsrichtung erreichbar. Darüberhinaus kann das Filtermaterial sicher in dem Filter befestigt werden. Als Filtermaterial hat sich insbesondere für Emulsionen von Öl in Wasser ein poröser Kunststoff, beispielsweise auf Polyurethan- oder auf Polyesterbasis, bewährt. In vorteilhafter Weiterbildung ist das Filtermaterial mit Aktivkohle beschichtet, wodurch eine hohe Reinigunsleistung bzw. Emulsionsspaltleistung erzielt werden kann.

Um übermäßige Strömungsturbulenzen sowohl innerhalb des Filters als auch an dessen Zulauf bzw. dessen Auslauf zu vermeiden, sollte der Filter über seine gesamte Länge einen im wesentlichen konstanten Querschnitt aufweisen. Vorzugsweise besitzt der Filter einen im wesentlichen kreisförmigen oder rechteckförmigen Strömungsquerschnitt.

Eine konstruktiv einfache Verbindung zwischen dem Schacht und dem Filter unter Vermeidung von zusätzlichen Bauteilen kann erreicht werden, wenn der Schacht direkt an dem Mantel des Filters befestigt ist. Vorzugsweise ist zwischen der Unterkante des Schachtes und der Oberseite des Mantels des Filters eine Dichtung angeordnet, um das unerwünschte Eindringen von nicht durch den Filter geströmter Flüssigkeit in den Schacht zuverlässig vermeiden zu können. Auf diese Weise kann auch eine Störung der laminaren Strömung innerhalb des Schachtes verhindert werden.

Der Schacht besteht bevorzugterweise aus einer Mantelfläche sowie einer oberen Abdeckung, in der mehrere Durchtrittsöffnungen ausgebildet sind, die die einzige Austrittsöffnung des Schachtes bilden. Die von unten durch den Strömungsdurchlaß aus dem Filter in den Schacht eintretenden Flüssigkeitsteilchen steigen somit über die gesamte Höhe des Schachtes in diesem auf und treten an dessen Oberseite durch die Durchtrittsöffnungen aus. Auf diese Weise bleiben die aufsteigenden Flüssigkeitsteilchen im wesentlichen vollständig unbeeinflußt von den Strömungsverhältnissen am Zulauf und Auslauf sowie innerhalb des Filters.

Gegebenenfalls kann die laminare Aufwärtsströmung innerhalb des Schachtes durch eine Gegenströmung gestört werden, mit der das zu reinigende Flüssigkeitsgemisch bzw. die entsprechende Emulsion durch die Durchtrittsöffnungen in der oberen Abdeckung des Schachtes hindurch von oben in den Schacht einströmt. Um eine derartige unerwünschte Gegenströmung zuverlässig zu vermeiden, ist in vorteilhafter Weiterbildung der Erfindung vorgesehen, daß die Durchtrittsöffnungen einen Durchmesser von weniger als 1 cm aufweisen. Dabei hat sich im Betrieb des Flüssigkeitsabscheiders ein Durchmesser der Durchtrittsöffnungen von 0,7 cm als äußerst vorteilhaft erwiesen.

Der Flüssigkeitsstand innerhalb des Behälters des Flüssigkeitsabscheiders kann gewissen Schwankungen unterliegen. Um einerseits ständig eine laminare Strömung innerhalb des Schachtes herzustellen und andererseits einen möglichst großen Abstand zwischen der Zulaufseite des Filters und den Durchtrittsöffnungen an der Oberseite des Schachtes zu erzielen, erstreckt sich erfindungsgemäß der Schacht von dem Filter bis etwa zur halben Bauhöhe des Behälters.

Der Strömungsdurchfluß zwischen dem Innenraum des Filters und dem Schacht kann durch eine einzige, relativ große Öffnung in dem Mantel des Filters gebildet sein. Vorzugsweise ist jedoch der Strömungsdurchfluß von gitterartigen Öffnungen in dem Mantel des Filters gebildet, wodurch ein großer Durchflußquerschnitt unter Beibehaltung einer hohen Stabilität des Mantels gewährleistet ist. Auch innerhalb des Schachtes müssen Strömungsturbulenzen zuverlässig vermieden werden. Zu diesem Zweck sollte der Schacht über seine gesamte Höhe einen im wesentlichen konstanten Querschnitt aufweisen. Vorzugsweise besitzt der Schacht einen im wesentlichen kreisförmigen oder rechteckförmigen Querschnitt.

In vorteilhafter Weiterbildung der Erfindung sind eine an die Einlaufschikane anschließende Ringkammer, die von der Wand des Behälters und einer das Behälterzentrum etwa konzentrisch umgebenden und zur Ablaufseite reichenden Trennwand gebildet ist, und eine von der Trennwand gebildete Innenkammer im Behälterzentrum vorgesehen, in der die Filtereinheit angeordnet ist.

Somit wird das Abscheiderteil einerseits von der Ringkammmer und andererseits von der innerhalb derselben befindlichen Innenkammer gebildet mit der Folge, daß das über den Einlauf zulaufende Flüssigkeitsgemisch sich vom Einlauf bis in die Behältertiefe ausbreitet und zugleich in der Ringkammer zunächst nach hinten in Richtung zum Ablauf strömt, um in dessen Bereich in die Innenkammer wieder nach vorne umgelenkt zu werden und erst dann zu der Trenneinrichtung zu gelangen. Hierdurch ergeben sich lange Strömungs- und Austauschwege mit der Folge, daß ein großer Teil der abzuscheidenden Flüssigkeit nach dem Schwerkraftprinzip getrennt wird. Die Leichtflüssigkeitströpfchen haben ausreichend Zeit, um in beruhigter Strömung aufzusteigen und sich durch Anlagerung zu vergrößern. Dabei wird der Behälter über den gesamten Querschnitt und einen großen Teil der Höhe unter gleichzeitiger Umlenkung der Strömung ausgenutzt, so daß sich die Verweilzeit des Flüssigkeitsgemisches im Behälter entsprechend erhöht.

In der fertigungstechnisch besonders einfachen Ausführung ist die die Ringkammer bildende Trennwand polygonal aus miteinander verbundenen Platten gebildet.

Vorzugsweise ist die Trenneinrichtung mittels eines Steckgestänges auswechselbar gelagert, so daß sie von oben her aus dem Behälter zur Durchführung von Reinigungs-Wartungs- oder Reparaturarbeiten, z.B. zu Austausch des Filtermaterials herausgenommen und in einfacher Weise wieder eingesetzt gegebenenfalls auch gegen eine andere Trenneinrichtung ausgewechselt werden kann.

Nachstehend ist die Erfindung anhand eines in der Zeichnung wiedergegebenen Ausführungsbeispiels beschrieben. In der Zeichnung zeigen:
- Figur 1: eine Draufsicht auf eine Ausführungsform eines Flüssigkeitsabscheiders;
- Figur 2: einen Längsschnitt durch den Flüssigkeitsabscheider gemäß Figur 1.

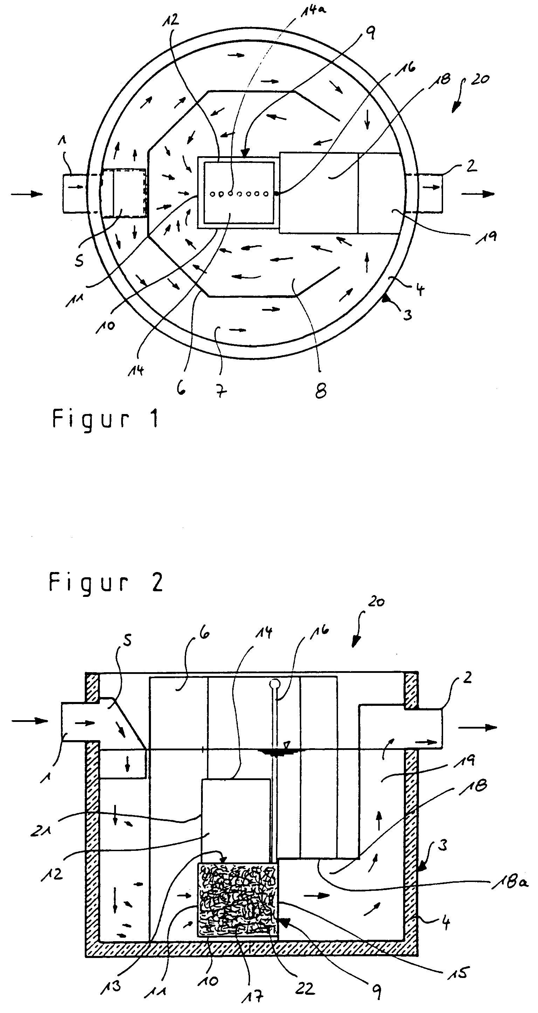

Der in den Figuren 1 und 2 dargestellte Flüssigkeitsabscheider 20 weist einen Behälter 3 auf, der beim gezeigten Ausführungsbeispiel einen kreisrunden Querschnitt besitzt. Der Behälter 3 besitzt einen Einlauf 1 und einen Ablauf 2, die, wie die Figur 2 zeigt, im oberen Bereich des Behälters 3 und auf etwa gleicher Höhe gegenüberliegend angeordnet sind.

In den Behälter 3 ist eine zum Behälterzentrum etwa konzentrisch verlaufende Trennwand 6 eingesetzt, die aus polygonal zusammengesetzten Platten gebildet ist. Sie begrenzt innenseitig eine Ringkammer 7, die außenseitig durch die Wand 4 des Behälters 3 begrenzt ist. Die Trennwand 6 reicht über das Behälterzentrum hinaus zur Ablaufseite des Behälters 3 und bildet an ihrer Innenseite im Behälterzentrum eine Innenkammer 8. Die äußere Ringkammer 7 und die Innenkammer 8 bilden eine Strömungsführung, in dem das zu reinigende Flüssigkeitsgemisch bzw. die zu reinigende Emulsion einer Trennung infolge der Schwer- bzw. Auftriebskraft unterliegt. Ferner weist der Behälter 3 einen Ablaufschacht 19 auf, der durch vertikale Wände von dem Abscheiderteil getrennt ist und eine im wesentlichen horizontale Platte 18a besitzt, die parallel über dem Boden des Behälters 3 angeordnet ist und eine bodennahe Ablaufkammer 18 vom eigentlichen Abscheiderteil trennt.

Am Einlauf 1 des Behälters 3 ist eine Einlaufschikane 5 angeordnet, die einen nach unten offenen, kurzen Schacht bildet und aus parallelen senkrechten Wänden und einer oberhalb des Einlaufs 1 ansetzenden oberen Wandung besteht

An der Einlaufseite der Ablaufkammer 18 ist eine Trenneinrichtung 9 angeordnet, die einen kreiszylindrischen, in Bodennähe des Behälters 3 angeordneten Filter 17 umfaßt. Der Filter 17 weist einen kreiszylindrischen Mantel 10 auf, der aus Edelstahl oder einem sonstigen geeigneten Werkstoff besteht. Innerhalb des Mantels 10 des Filters 17 ist ein von einem porigen Kunststoff gebildetes Filtermaterial 22 angeordnet, dessen Oberfläche mit Aktivkohle beschichtet ist.

Der Mantel 10 des Filters 17 ist auf seiner gemäß Figur 2 linken Zulaufseite 11 sowie auf seiner entgegengesetzten, gemäß Figur 2 rechten Auslaufseite 15 im wesentlichen vollständig offen, so daß er im wesentlichen horizontal von dem zu reinigenden Flüssigkeitsgemisch bzw. der Emulsion durchströmt wird.

Auf der Oberseite des Mantels 10 des Filters 17 ist ein Schacht 12 angebracht, der sich im wesentlichen vertikal erstreckt und eine Mantelfläche 21 sowie eine obere Abdeckung 14 aufweist. In der gemäß Figur 2 oberen Oberfläche des Mantels 10 des Filters 17 sind mehrere, einen Strömungsdurchlaß bildende Öffnungen 13 ausgebildet, die eine Strömung von dem mit dem Filtermaterial 22 gefüllten Innenraum des Filters 17 zu dem Innenraum des Schachtes 12 zulassen. Der Schacht 12 ist an seinem unteren Ende derart an der oberen Oberfläche des Mantels 10 des Filters 17, beispielsweise unter Zwischenschaltung einer Dichtung befestigt, daß an der Verbindungsstelle das Eindringen von Flüssigkeit in den Schacht 12 von außen vermieden ist.

Wie in Figur 1 dargestellt ist, sind in der oberen Abdeckung 14 mehrere Durchtrittsöffnungen 14a ausgebildet, deren Durchmesser geringer als 1 cm ist und vorzugsweise 0,7 cm beträgt. Die Durchtrittsöffnungen 14a ermöglichen eine Flüssigkeitsströmung von dem Innenraum des Schachtes 12 zu dem Innenraum des Behälters 3.

Die aus dem Filter 17 und dem Schacht 12 bestehende Trenneinrichtung 9 ist an einem Gestänge 16 gelagert. Mittels des Gestänges 16 kann die Trenneinrichtung als Ganzes aus dem Behälter 3 herausgehoben und von oben auch wieder eingesetzt werden.

Wie in den Figuren 1 und 2 angedeutet ist, wird das über den Einlauf 1 einströmende, beispielsweise aus Wasser und Öl bestehende Flüssigkeitsgemisch mittels der Einlaufschikane 5 nach unten in die Tiefe des Behälters 3 umgelenkt und strömt über die gesamte Höhe des Behälters 3 in der äußeren Ringkammer 7 in Richtung zum Ablauf 2. Vor dem Ablaufschacht 19 wird das Flüssigkeitsgemisch in die Innenkammer 8 umgelenkt und strömt dort im bodennahen Bereich über die Zulaufseite 11 in den Filter 17 ein. Innerhalb des Filters 17 durchströmt das zu reinigende Flüssigkeitsgemisch bzw. die Emulsion das Filtermaterial 22, wodurch eine Reinigung der Flüssigkeit bzw. eine Emulsionsspaltung erreicht wird. Das gereinigte Wasser verläßt den Filter 17 über die Auslaufseite 15 und gelangt von dieser direkt in die Ablaufkammer 18, von der es in den aufsteigenden Ablaufschacht 19 strömt und über den Ablauf 2 abläuft.

Das innerhalb des Filters 17 zurückgehaltene Öl und die an dieses gebundenen chemischen Stoffe, die leichter als Wasser sind, strömen infolge der Auftriebskraft durch den von den Öffnungen 13 gebildeten Strömungsdurchlaß in den Schacht 12, in dem sie in vollständig beruhigter laminarer Strömung aufsteigen. Sobald die Stoffe die oberen Abdeckung 14 des Schachtes 12 erreicht haben, strömen sie durch die Durchtrittsöffnungen 14a und sammeln sich an der Oberfläche der im Behälter 3 des Flüssigkeitsabscheiders 20 befindlichen Flüssigkeit. Wenn die Dicke der sich an der Oberfläche sammelnden Schicht von abgeschiedenen Stoffen ein vorbestimmtes Maß erreicht hat, werden die Stoffe in bekannter Weise, beispielsweise mittels Absaugens, aus dem Flüssigkeitsabscheider entfernt.

## Patentansprüche

1. Flüssigkeitsabscheider bestehend aus
einem Behälter (3) mit einem oben liegenden Einlauf (1) mit Einlaufschikane (5) und einem auf etwa gleicher Höhe sowie gegenüber dem Einlauf liegenden Ablauf (2) und
einem an den Einlauf (1) anschließenden Abscheiderteil mit einer bodennahen Trenneinrichtung (9) und
einem von dieser nach oben zum Ablauf (2) reichenden Ablaufschacht (19),
wobei die Trenneinrichtung (9) einen von dem Flüssigkeitsgemisch durchströmten Filter (17) mit Filtermaterial (22) aufweist,
dadurch gekennzeichnet, daß das Filtermaterial (22) des Filters (17) von einem an gegenüberliegenden Seiten (11, 15) und zu einem Schacht hin offenen Mantel (10) umgeben und im wesentlichen horizontal durchströmt ist und daß oberhalb des Mantels (10) der mit dem Filter (17) strömungstechnisch in Verbindung stehende Schacht (12) angeordnet ist, in dem die im Filtermaterial (22) zurückgehaltenen Stoffe und Teilchen aufsteigen können.

2. Flüssigkeitsabscheider nach Anspruch 1, dadurch gekennzeichnet, daß die strömungstechnische Verbindung zwischen dem Innenraum des Filters (17) und dem Schacht (12) von gitterartigen Öffnungen (13) in dem Mantel (10) des Filters (17) gebildet ist.

3. Flüssigkeitsabscheider nach einem der Ansprüche 1 bis 2, dadurch gekennzeichnet, daß das Filtermaterial von einem porigen Kunststoff gebildet ist.

4. Flüssigkeitsabscheider nach Anspruch 3, dadurch gekennzeichnet, daß das Filtermaterial (22) mit Aktivkohle beschichtet ist.

5. Flüssigkeitsabscheider nach einem der Ansprüche 1 bis 4, dadurch gekennzeichnet, daß der Filter einen im wesentlichen kreisförmigen Strömungsquerschnitt aufweist.

6. Flüssigkeitsabscheider nach einem der Ansprüche 1 bis 4, dadurch gekennzeichnet, daß der Filter einen im wesentlichen rechteckförmigen Strömungsquerschnitt aufweist.

7. Flüssigkeitsabscheider nach einem der Ansprüche 1 bis 6, dadurch gekennzeichnet, daß der Schacht (12) an dem Mantel (10) des Filters (17) befestigt ist.

8. Flüssigkeitsabscheider nach Anspruch 7, dadurch gekennzeichnet, daß zwischen dem Mantel (10) des Filters (17) und der Unterseite des Schachtes (12) eine Dichtung angeordnet ist.

9. Flüssigkeitsabscheider nach einem der Ansprüche 1 bis 8, dadurch gekennzeichnet, daß der Schacht (12) eine Mantelfläche (21) sowie eine obere Abdeckung (14) aufweist, in der mehrere Durchtrittsöffnungen (14a) ausgebildet sind.

10. Flüssigkeitsabscheider nach Anspruch 9, dadurch gekennzeichnet, daß die Durchtrittsöffnungen (14a) einen Durchmesser von weniger als 1 cm aufweisen.

11. Flüssigkeisabscheider nach Anspruch 9 oder 10, dadurch gekennzeichnet, daß der Durchmesser der Durchtrittsöffnungen (14a) 0,7 cm beträgt.

12. Flüssigkeitsabscheider nach einem der Ansprüche 1 bis 11, dadurch gekennzeichnet, daß der Schacht (12) sich von dem Filter (17) bis etwa zur halben Bauhöhe des Behälters (3) erstreckt.

13. Flüssigkeitsabscheider nach einem der Ansprüche 1 bis 12, dadurch gekennzeichnet, daß der Schacht (12) einen im wesentlichen kreisförmigen oder rechteckförmigen Querschnitt aufweist.

14. Flüssigkeitsabscheider nach einem der Ansprüche 1 bis 13, gekennzeichnet durch eine an die Einlaufschikane (5) anschließenden Ringkammer (7), die von der Wand (4) des Behälters (3) und einer das Behälterzentrum etwa konzentrisch umgebenden und zur Auslaufseite reichenden Trennwand (6) gebildet ist, und durch eine von der Trennwand (6) gebildete Innenkammer (8) im Behälterzentrum, in der die Trenneinrichtung (9) angeordnet ist.

15. Flüssigkeitsabscheider nach Anspruch 14, dadurch gekennzeichnet, daß die die Ringkammer (7) bildende Trennwand (6) polygonal aus miteinander verbundenen Platten gebildet ist.

## Claims

1. Liquid separator comprising a container (3) with an inlet (1) having an inlet baffle (5) located at the top and an outlet (2) at roughly the same level and facing the inlet, a separator part with a separating device (9) close to the bottom connected to the inlet (1) and an outlet shaft (19) extending upwards from the separating device to the outlet (2), the separating device (9) having a filter (17), through which the liquid mixture flows and having a filter material (22), characterized in that the filter material (22) of the filter (17) is surrounded by a jacket (10) open to opposite sides (11, 15) and towards a shaft and through which there is a substantially horizontal flow and that above the jacket (10) is located the shaft (12) which is in flow connection with the filter (17) and in which can rise the substances and particles retained in the filter material (22).

2. Liquid separator according to claim 1, characterized in that the flow connection between the interior of the filter (17) and the shaft (12) is formed by lattice-like openings (13) in the jacket (10) of the filter (17).

3. Liquid separator according to one of the claims 1 and 2, characterized in that the filter material is formed by a porous plastic.

4. Liquid separator according to claim 3, characterized in that the filter material (22) is coated with activated carbon.

5. Liquid separator according to one of the claims 1 to 4, characterized in that the filter has a substantially circular flow cross-section.

6. Liquid separator according to one of the claims 1 to 4, characterized in that the filter has a substantially rectangular flow cross-section.

7. Liquid separator according to one of the claims 1 to 6, characterized in that the shaft (12) is fixed to the jacket (10) of the filter (17).

8. Liquid separator according to claim 7, characterized in that a seal is positioned between the jacket (10) of the filter (17) and the underside of the shaft (12).

9. Liquid separator according to one of the claims 1 to 8, characterized in that the shaft (12) has a circumferential surface (21) and an upper cover (14) in which are formed several passage openings (14a).

10. Liquid separator according to claim 9, characterized in that the passage openings (14a) have a diameter of less than 1 cm.

11. Liquid separator according to claim 9 or 10, characterized in that the diameter of the passage openings (14a) is 0.7 cm.

12. Liquid separator according to one of the claims 1 to 11, characterized in that the shaft (12) extends from the filter (17) to roughly half the overall height of the container (3).

13. Liquid separator according to one of the claims 1 to 12, characterized in that the shaft (12) has a substantially circular or rectangular cross-section.

14. Liquid separator according to one of the claims 1 to 13, characterized by an annular chamber (7) connected to the inlet baffle (5) and which is formed by the wall (4) of the container (3) and a partition (6) roughly concentrically surrounding the container centre and extending to the outlet side and by an inner chamber (8) in the container centre formed by the partition (6) and in which is located the separating device (9).

15. Liquid separator according to claim 14, characterized in that the partition (6) forming the annular chamber (7) is formed polygonally from interconnected plates.

## Revendications

1. Séparateur de liquide consistant en un récipient (3) présentant une entrée (1) disposée en partie supérieure munie d'une chicane d'entrée (5) et une sortie (2) disposée à peu prés à la même hauteur que l'entrée et en regard de celle-ci, et en un compartiment de séparation relié à l'entrée (1) comprenant un dispositif de séparation (9) disposé prés du fond et un puits de sortie (19) dirigé vers le haut, à partir du dispositif de séparation jusqu'à la sortie (2), le dispositif de séparation (9) présentant un filtre (17) avec matériau filtrant (22) traversé par le mélange de liquides, caractérisé en ce que le matériau filtrant (22) du filtre (17) est entouré de et sensiblement horizontalement traversé par une enveloppe (10) ouverte sur des côtés opposés (11,15) et en direction d'un puits, et en ce que le puits (12) en liaison fluidique avec le filtre (17) est disposé au-dessus de l'enveloppe (10), puits dans lequel les substances et particules retenues dans le matériau filtrant (22) peuvent remonter.

2. Séparateur selon la revendication 1, caractérisé en ce que la liaison fluidique entre l'espace intérieur du filtre (17) et le puits (12) est constituée par des ouvertures (13) en forme de grille dans l'enveloppe (10) du filtre (17).

3. Séparateur selon l'une quelconque des revendications 1 ou 2, caractérisé en ce que le matériau filtrant consiste en une matière synthétique poreuse.

4. Séparateur selon la revendication 3, caractérisé en ce que le matériau filtrant (22) est revêtu de charbon actif.

5. Séparateur selon l'une quelconque des revendications 1 à 4, caractérisé en ce que le filtre présente une section de passage sensiblement circulaire.

6. Séparateur selon l'une quelconque des revendications 1 à 4, caractérisé en ce que le filtre présente une section de passage sensiblement rectangulaire.

7. Séparateur selon l'une quelconque des revendications 1 à 6, caractérisé en ce que le puits (12) est fixé à l'enveloppe (10) du filtre (17).

8. Séparateur selon la revendication 7, caractérisé en ce qu'un Joint est disposé entre l'enveloppe (10) du filtre (17) et la face inférieure du puits (12).

9. Séparateur selon l'une quelconque des revendications 1 à 8, caractérisé en ce que le puits (12) présente une surface d'enveloppe (21) ainsi qu'une couverture (14) supérieure dans laquelle sont ménagés plusieurs passages (14a).

10. Séparateur selon la revendication 9, caractérisé en ce que les passages (14a) présentent un diamètre inférieur à 1 cm.

11. Séparateur selon l'une quelconque des revendications 9 ou 10, caractérisé en ce que le diamètre des passages (14a) correspond à 0,7 cm.

12. Séparateur selon l'une quelconque des revendications 1 à 11, caractérisé en ce que le puits (12) s'étend du filtre (17) jusqu'à mi-hauteur jusqu'à environ la moitié de la hauteur du récipient (3).

13. Séparateur selon l'une quelconque des revendications 1 à 12, caractérisé en ce que le puits (12) présente une section sensiblement circulaire ou rectangulaire.

14. Séparateur selon l'une quelconque des revendications 1 à 13, caractérisé par une chambre annulaire (7) reliée à la chicane d'entrée (5), formée par la paroi (4) du récipient (3) et une paroi de séparation (6) entourant de manière approximativement concentrique le centre du récipient et s'étendant jusqu'au côté sortie, et par une chambre intérieure (8) située au centre du récipient et formée par la paroi de séparation (6), dans laquelle est disposé le dispositif de séparation (9).

15. Séparateur selon la revendication 14, caractérisé en ce que la paroi de séparation (6) formant la chambre annulaire (7) a une forme polygonale constituée de panneaux reliés entre eux.
